# EUROPÄISCHE PATENTSCHRIFT

(11) **EP 1 967 073 B1**
(45) Veröffentlichungstag und Bekanntmachung des Hinweises auf die Patenterteilung: **15.09.2010**
(21) Anmeldenummer: 08004197.3
(22) Anmeldetag: 06.03.2008
(51) Int. Cl.: A22C 11/12, B65B 9/12

(54) **Automatische Spreizverstellung**
Automatic spreading adjustment
Réglage d'extension automatique

(30) Priorität: 08.03.2007 DE 102007011422
(43) Veröffentlichungstag der Anmeldung: 10.09.2008
(73) Patentinhaber: Poly-clip System GmbH & Co. KG, 60489 Frankfurt am Main (DE)
(72) Erfinder: Ebert, Detlef, 61231 Bad Nauheim (DE); Hummel, Michael, 65479 Raunheim (DE)
(74) Vertreter: Eisenführ, Speiser & Partner

(56) Entgegenhaltungen:
- WO-A-02/087974
- DE-A1- 19 644 074
- DE-U1- 20 317 730
- DE-U1-202006 012 324
- US-A- 5 167 567

## Beschreibung

Die Erfindung betrifft eine Vorrichtung zur Ausbildung eines füllgutfreien Zopfes an einem Verpackungshüllenmaterial gemäß dem Oberbegriff des Anspruchs 1. Eine derartige Vorrichtung ist aus DE-203 17 730 U bekannt.

Bei der Herstellung von wurstförmigen Produkten in schlauchförmigen Verpackungen ist es häufig erwünscht, ein nur teilweise bzw. schlaff gefülltes Produkt zu erhalten. Bei beispielsweise Dichtmassen kann eine solche schlaff gefüllte Verpackung zum Verbrauch geöffnet werden, ohne dass der Inhalt durch erhöhten Innendruck beim Öffnen ungewollt austritt. Bei der Herstellung von Wurstprodukten kann eine mit Wurstbrät nur teilweise gefüllte Verpackung erwünscht sein, um dem Wurstprodukt einen anderen als einen runden Querschnitt zu verleihen und diesen beispielsweise durch Kochen zu stabilisieren. Das Wurstprodukt wird dazu während des Kochens in eine entsprechende Form gepresst. Ein viereckiger bzw. quadratischer Querschnitt kann bei Wurstprodukten beispielsweise erwünscht sein, wenn diese als Belag für Toast vorgesehen sind. Da ein quadratischer Querschnitt einen größeren Umfang hat als ein runder, darf die Verpackung nicht prall gefüllt sein. Das Füllgut kann sich außerdem beim Kochen ausdehnen, ohne dass die Gefahr des Platzens der Verpackung besteht.

Zur Herstellung von nur schlaff bzw. teilweise gefüllten wurstförmigen Produkten sind aus der Praxis verschiedene Verfahren bekannt, die das zusätzlich benötigte Verpackungshüllenmaterial durch Abziehen von weiterem Verpackungshüllenmaterial vom Materialvorrat bereitstellen.

Die europäische Patentanmeldung 0 065 807 schlägt ein Verfahren vor, bei dem ein Abschnitt eines an seinem vorderen Ende durch einen Clip verschlossenen schlauchförmigen Verpackungshüllenmaterials zunächst prall gefüllt wird. Unmittelbar vor dem Füllrohrausgang sind Verdrängerscheren ortsfest angeordnet. Nach Abschluss des Füllvorganges werden diese zwischen den prallgefüllten Abschnitt des Verpackungshüllenmaterials und das Füllrohr gefahren. Parallel zum Förderweg und in Förderrichtung hinter den Verdrängerscheren ist ein Pressbackenpaar angeordnet, das anschließend den prall gefüllte Abschnitt einklemmt und vom Füllrohr weg bewegt. Dabei wird Verpackungshüllenmaterial vom Vorrat durch die feststehenden Verdrängerscheren nachgezogen. Durch Nachführen der Pressbacken wird ein konstanter Innendruck in der Verpackung aufrechterhalten. Hat die Verpackung bei vorgegebener Füllgutmenge eine bestimmte Länge erreicht, wird sie durch Setzen eines zweiten Clips verschlossen und vom übrigen Vorrat an Verpackungshüllenmaterial getrennt.

Weiterhin geht aus dem deutschen Patent 38 40 522 ein Verfahren zum Ausbilden eines Zopfes an einer Wursthülle hervor, die ein Wurstbrät aufnimmt. Dieses Verfahren findet Anwendung bei einer Wurstclipmaschine, die weitestgehend einen üblichen Aufbau aufweist. Hierbei werden nach dem Füllen der Wursthülle mit dem Wurstbrät zwei Verdrängerscherenpaare geschlossen, sodass sich ein Abschnitt der Wursthülle, welche das Wurstbrät aufnimmt, sowie ein leerer Abschnitt der Wursthülle bildet. Anschließend findet zur Bildung eines Zopfes ein Spreizen der Verdrängerscherenpaare statt. Dabei wird das Verdrängerscherenpaar, welches dem freien Ende der verschlossenen Wursthülle am nächsten ist, entlang des Vorschubwegs des Wursthüllenmaterials in der Weise verfahren, dass der mit dem Wurstbrät gefüllte Abschnitt der Wursthülle in Vorschubrichtung des Wursthüllenmaterials verschoben wird und gleichzeitig leeres Wursthüllenmaterial durch das zweite Verdrängerscherenpaar nachgezogen wird. Das dabei nachgezogene leere Wursthüllenmaterial bildet einen ersten füllgutfreien Zopf, der bei prall gefüllten Produkten zum Setzen eines Verschlussclips und eines weiteren Clips als Anfang für das nächste Produkt benötigt wird. Ist ein nur teilweise gefülltes Wurstprodukt gewünscht, wird das o.g. Verdrängerscherenpaar weiter entlang seines Vorschubwegs verfahren. Dieses weitere Spreizen, das auch als Überspreizen bezeichnet wird, schafft einen verlängerten füllgutfreien Zopf. Sobald die gewünschte Zopflänge erreicht ist, wird ein zweiter Clip an der von dem ersten Verdrängerscherenpaar wegweisenden Seite des zweiten Verdrängerscherenpaares gesetzt und anschließend das Wursthüllenmaterial abgetrennt. Bei diesem an sich bereits gut arbeitenden Verfahren wird zum ersten Spreizen, wie es zum Verschließen prall gefüllter Verpackungen nötig ist, ein erster Antrieb verwendet. Das Überspreizen, also das Schaffen eines verlängerten füllgutfreien Zopfes, übernimmt ein zweiter Antrieb.

Die vorgenannten Verfahren weisen Nachteile auf. Im Fall der EP-Anmeldung 0 065 807 besteht bei der Verpackung von grobkörnigem Füllgut die Gefahr, dass das Verpackungshüllenmaterial beim Zusammenpressen beschädigt wird. Vorrichtungen, die nach dem in dem DE-Patent 38 40 522 beschriebenen Verfahren arbeiten, verwenden einen ersten Antrieb zum Spreizen der Verdrängerscherenpaare. Da das Überspreizen eine Zusatzfunktion darstellt, wird diese üblicherweise durch einen nachträglich angebauten zweiten Antrieb realisiert.

Aufgabe der vorliegenden Erfindung ist es, die vorgenannten Nachteile zu überwinden. Insbesondere ist es Aufgabe der Erfindung, eine Vorrichtung zur Ausbildung eines Füllgutfreien Zopfes an einem Verpackungshüllenmaterial der eingangs genannten Art bereitzustellen, die einfach gebaut ist und die eine einfache Einstellung des Hubs des beweglichen Verdrängerscherenpaares erlaubt.

Die vorstehende Aufgabe wird durch die Merkmale des Anspruchs 1 gelöst. In den sich daran anschließenden Ansprüchen 2 bis 10 finden sich vorteilhafte Ausgestaltungen hierzu.

Im Besonderen wird eine Vorrichtung zum Ausbilden eines Zopfes an einem Verpackungshüllenmaterial, das ein Füllgut, insbesondere Wurstbrät, aufnimmt, vorgeschlagen, wobei der Zopf wenigstens während seiner Ausbildung zumindest annährend füllgutfrei ist. Die Vorrichtung enthält eine erste Verdrängereinheit sowie eine zweite Verdrängereinheit, die gegenüber der ersten Verdrängreinheit in einer Linearbewegung reversibel verfahrbar ist. Sie enthält weiterhin eine Antriebseinheit für zumindest den Antrieb der Linearbewegung der zweiten Verdrängreinheit. Dabei ist zwischen der Antriebseinheit und der zweiten Verdrängereinheit mindestens eine Antriebskraft-Übertragungseinheit vorgesehen, das die von der Antriebseinheit hervorgerufene Antriebskraft auf die zweite Verdrängereinheit überträgt. Die Antriebskraft-Übertragungseinheit ist um einen Schwenkpunkt reversibel verschwenkbar und seine Lageposition ist einstellbar.

Ausgehend von einer Vorrichtung entsprechend dem DE-Patent 38 40 522 oder der DE-203 17 730 U wird also eine Vorrichtung vorgeschlagen, die in der Lage ist, mit einfachen Mitteln eine Linearbewegung der Verdrängereinheit sowohl zum normalen Spreizen, als auch zum Überspreizen zu realisieren. Die vorgeschlagene Vorrichtung verwendet zum Spreizen der Verdrängerscheren sowie zum Überspreizen nur einen einzigen Antrieb. Des weiteren beinhaltet sie eine Betätigungseinheit zur stufenlosen Einstellung der Überspreizung.

In einer bevorzugten Ausführung ist zur Verstellung der Lageposition des Schwenkpunktes eine mit der Antriebskraft-Übertragungseinheit schwenkbar verbundene und den Schwenkpunkt enthaltende Betätigungseinheit vorgesehen, die entlang einer Führungsbahn reversibel mittels eines Verstellantriebs verfahrbar ist. Durch eine solche Betätigungseinheit ist eine vereinfachte Einstellung des Schwenkpunktes möglich, die ggf. durch die Verwendung eines geeigneten Verstellantriebes automatisiert und in eine Prozesssteuerung integriert werden kann.

Es ist vorteilhaft, wenn die Führungsbahn in einer Ausrichtung angeordnet ist, in der sie parallel zu einer gedachten Linie zwischen dem Anlenkpunkt der zweiten Verdrängereinheit und dem Krafteinleitungspunkt an der Antriebskraft-Übertragungseinheit zu der Antriebseinheit verläuft. So kann eine Hubverstellung des beweglichen Verdrängerscherenpaares vorgenommen werden, wobei nur der Hubendpunkt verschoben wird, der Startpunkt, in dem die Verdrängerscherenpaare aneinander liegen, aber immer gleich bleibt.

Entsprechend dem vorgesehenen Einsatz der vorgeschlagenen Vorrichtung kann die Verstellung der Lageposition des Schwerpunktes motorisch, aber auch manuell erfolgen, wodurch ein einfacherer Aufbau und eine vereinfachte Steuerung möglich wird.

Wird der Verstellantrieb durch ein motorisch angetriebenes Zahnrad gebildet ist, welches mit einer an der Betätigungseinheit vorgesehenen Zahnstange kämmt, ist eine schlupffreie Verstellung des Schwenkpunktes möglich.

Es ist weiterhin vorteilhaft, wenn die Antriebskraft-Übertragungseinheit durch eine Betätigungsstange gebildet ist, die an ihrem zu der zweiten Verdrängereinheit weisenden Ende mit dieser gelenkig verbunden ist und die an ihrem zu der Antriebseinheit weisenden Ende mit der Antriebseinheit in Wirkverbindung steht. Eine solche Betätigungsstange gewährleistet eine direkte und verlustfreie Kraftübertragung.

Um Kollisionen mit anderen Maschinenteilen zu vermeiden, kann die Betätigungsstange im Bereich ihres zu der zweiten Verdrängereinheit weisenden Endes eine in der Bewegungsebene liegende Abkröpfung aufweisen. Durch eine entsprechende Ausgestaltung dieser Abkröpfung wird zudem eine Verkürzung der Baulänge der Vorrichtung erreicht sowie eine optimale Anpassung der Lage der zweiten Verdrängereinheit.

In einer bevorzugten Ausführung wird die zweite Verdrängereinheit dabei entlang einer ersten Führungselementeanordnung, die vorzugsweise durch Führungsstangen gebildet ist, geführt, deren Führungsachse die Mittellängsachse der Antriebskraft-Übertragungseinheit schneidet, wobei in vorteilhafter Weise zylindrische Führungsstangen eine hohe Führungsgenauigkeit bieten. Der Schnittpunkt der Achsen bildet idealerweise den Verbindungspunkt zwischen der Antriebskraft-Übertragungseinheit und der zweiten Verdrängereinheit für eine direkte Krafteinleitung.

In gleicher Weise wird die Antriebskraft-Übertragungseinheit im Bereich der Antriebseinheit entlang einer zweiten Führungselementeanordnung, die ebenfalls vorzugsweise durch Führungsstangen gebildet ist und die eine dritte Führungseinrichtung enthalten kann geführt, deren Führungsachse die Mittellängsachse des Antriebskraft-Übertragungselements schneidet.

Weiterhin ist es vorteilhaft, wenn die erste und dritte Führungseinrichtung zumindest annähernd parallel zueinander verlaufen.

Die Betätigungsstange bildet zwischen dem Schwenkpunkt und der ersten Führungselementeanordnung einen ersten Teilhebel und zwischen dem Schwenkpunkt und der zweiten Führungselementeanordnung einen zweiten Teilhebel. Es ist grundsätzlich möglich, die Führungselementeanordnungen beliebig zueinander anzuordnen. Verlaufen sie aber annähernd parallel zueinander, so ist das Verhältnis der Teilhebel, unabhängig von der Winkellage der Betätigungsstange, annähernd konstant. Dadurch wird das zweite Verdrängerscherenpaar, bei konstanter Antriebskraft, mit einer dem Hebelverhältnis proportionalen, konstanten Kraft bewegt. Des weiteren sind auch die zurückgelegten Wege der Hebelenden einander proportional, wodurch eine einfache und genaue Steuerung möglich ist.

Ist die Antriebskraft-Übertragungseinheit an der zweiten Führungselementeanordnung mittels eines gelenkelastischen Pufferelements angebunden, können Belastungsspitzen aus dem Antrieb gedämpft werden. Dadurch wird auch eine Schonung des Verpackungsmaterials erreicht sowie mögliche Beschädigungen vermieden. Die Dämpfung der Belastungsspitzen aus dem Antrieb schont ebenfalls die gesamte nachfolgende Mechanik und sorgt so für weniger Verschleiß und eine höhere Lebensdauer.

Die Antriebseinheit für die Antriebskraft-Übertragungseinheit kann auf vielfältige Weise realisiert werden. In einer bevorzugten Ausführung ist sie eine zyklisch arbeitende Antriebseinheit, die vorteilhaft durch eine Kurvenscheibe gebildet ist. Dabei ist ein schlupffreier und direkter Antrieb gewährleistet, wenn die Antriebskraft-Übertragungseinheit im Bereich ihres zu der Antriebseinheit weisenden Endes eine Führungsrolle aufweist, die in Eingriff mit der Führungsbahn der Kurvenscheibe steht. Zur weiteren Verringerung von Verlusten kann der Zyklus der Antriebseinheit auf den Takt der Clipmaschine abgestimmt werden.

Um ein Verschwenken der Antriebskraft-Übertragungseinheit gegenüber der Antriebseinheit zu ermöglichen, sollte die Antriebskraft-Übertragungseinheit im Bereich ihres zu der Antriebseinheit weisenden Endes eine gelenkige Lagerung aufweisen, die in einer vorteilhaften Ausführung an der zweiten Führungselementeanordnung angebracht ist.

In einer vorteilhaften Ausführung ist es vorgesehen, dass die erste und/oder die zweite Verdrängereinheit jeweils durch einen Linearspreizverdränger gebildet sind. Es können aber auch andere Verdränger, wie Irisverdränger, eingesetzt werden.

Zum Verschließen des Verpackungshüllenmaterials kann beispielsweise eine Verschlussmittel-Setzeinheit vorgesehen sein, die in der Lage ist, Verschlussmittel, insbesondere Clips zum Verschließen des Verpackungshüllenmaterials zur Ausbildung von wurstförmigen Produkten zu setzen.

Weiterhin kann eine Trenneinheit vorgesehen sein, die in der Lage ist, Abschnitte des Verpackungshüllenmaterials von dem Vorrat an Verpackungshüllenmaterial zur Ausbildung von wurstförmigen Produkten abzutrennen.

Es kann im weiteren eine Fülleinheit, vorzugsweise ein Füllrohr, vorgesehen sein, das in der Lage ist, Füllgut in das Verpackungshüllenmaterial einzubringen und an dem in einer weiteren vorteilhaften Ausführung ein Vorrat an leerem Verpackungshüllenmaterial ausgebildet ist.

Weitere vorteilhafte Ausgestaltungen sowie ein Ausführungsbeispiel der Erfindung werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen.

Es zeigen:
- Fig. 1: eine schematische Ansicht des prinzipiellen Aufbau einer Clipmaschine, bei der die vorliegende Erfindung zum Einsatz kommt;
- Fig. 2: eine Ansicht von oben auf die erfindungsgemäße Vorrichtung;
- Fig. 3: eine perspektivische Darstellung der erfindungsgemäßen Vorrichtung von rechts unten und
- Fig. 4: eine perspektivische Darstellung der erfindungsgemäßen Vorrichtung von links unten.

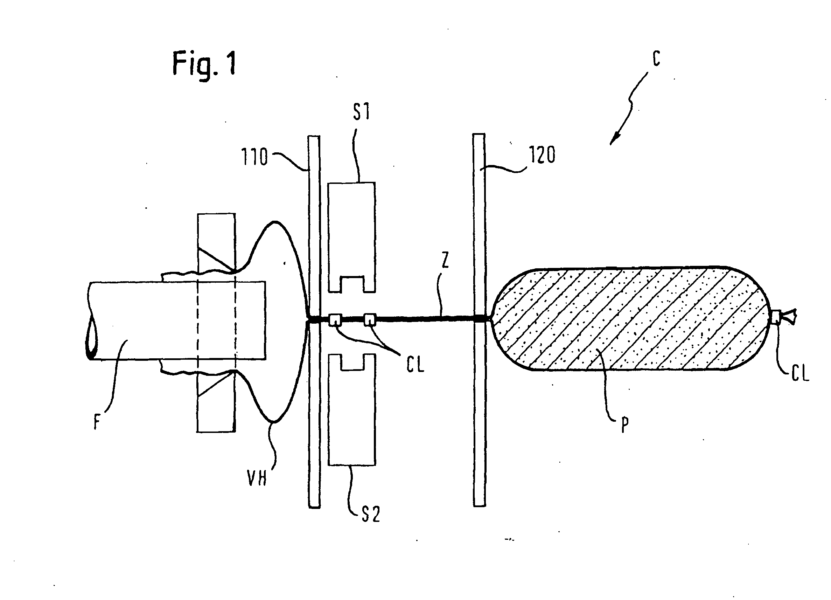

Das nachstehend beschriebene Ausführungsbeispiel einer erfindungsgemäßen Vorrichtung zum Ausbilden eines füllgutfreien Zopfes Z an einem Verpackungshüllenmaterial VH findet bei einer Clipmaschine C Verwendung. Bei dieser in Fig. 1 schematisch wiedergegebenen Clipmaschine C erstreckt sich von links ein horizontal ausgerichtetes Füllrohr F, auf dem sich ein Vorrat an Verpackungshüllenmaterial VH befindet und über das das Füllgut, hier Wurstbrät, in das am vorderen Ende durch einen Clip CL füllgutdicht verschlossene Verpackungshüllenmaterial VH einfüllbar ist.

Unmittelbar vor dem rechten Ende des Füllrohrs F befindet sich eine Verdrängerscherenanordnung 100, die aus zwei Verdrängerscherenpaare 110, 120 besteht, welche Verdrängereinheiten bilden und welche parallel zueinander sowie senkrecht zu dem zumindest annähernd horizontal verlaufenden Förder- und Herstellweg der Wurstprodukte P ausgerichtet vorgesehen sind. Das in der Darstellung linke Verdrängerscherenpaar 110 ist ortsfest angeordnet. Dagegen kann das rechte Verdrängerscherenpaar 120 in Förderrichtung linear und reversibel verfahren werden. Die beiden Verdrängerscherenpaare 110, 120 geben in ihrem geöffneten Zustand den nach rechts verlaufenden Förderweg für das Füllgut frei, während sie im geschlossenen Zustand das sich zwischen ihnen befindliche Verpackungshüllenmaterial VH einschnüren und ein weiteres Befüllen mit Füllgut verhindern. In vertikaler Richtung ober- und unterhalb der Verdrängerscherenpaare 110, 102 ist jeweils ein in einer in Fig.1 nicht näher dargestellten Ausgangsstellung befindliches Schließwerkzeug S1, S2 der Clipmaschine C angeordnet, das zum Setzen und Verschließen der Clips CL verwendet wird. Hierzu sind die beiden Schließwerkzeuge S1, S2, die durch einen Stempel S1 und eine Matrize S2 gebildet werden, mittels eines nicht weiter dargestellten Antriebs aus der Ausgangsstellung in eine Schließstellung reversibel auf den füllgutfreien Zopf Z zu bewegbar. Damit die Schließwerkzeuge S1, S2 zwischen die beiden Verdrängerscherenpaare 110, 120 einfahren können, wird das in Fig.1 rechte Verdrängerscherenpaar 120 um eine vorbestimmte Wegstrecke reversibel nach rechts verfahren. Die vorbestimmte Wegstrecke entspricht dabei zumindest der Breite der Schließwerkzeuge S1, S2. Sobald das rechte Verdrängerscherenpaar 120 nach rechts verfahren wurde, fahren die beiden Schließwerkzeuge S1, S2 aufeinander zu, wie dies in Fig.1 dargestellt ist. Das rechte Verdrängerscherenpaar 120 kann über die für das Auseinanderfahren der Schließwerkzeuge 110, 120 notwendige Wegstrecke noch weiter nach rechts verfahren werden, wie dies in Fig.1 gezeigt ist und nachstehend noch weiter erläutert wird.

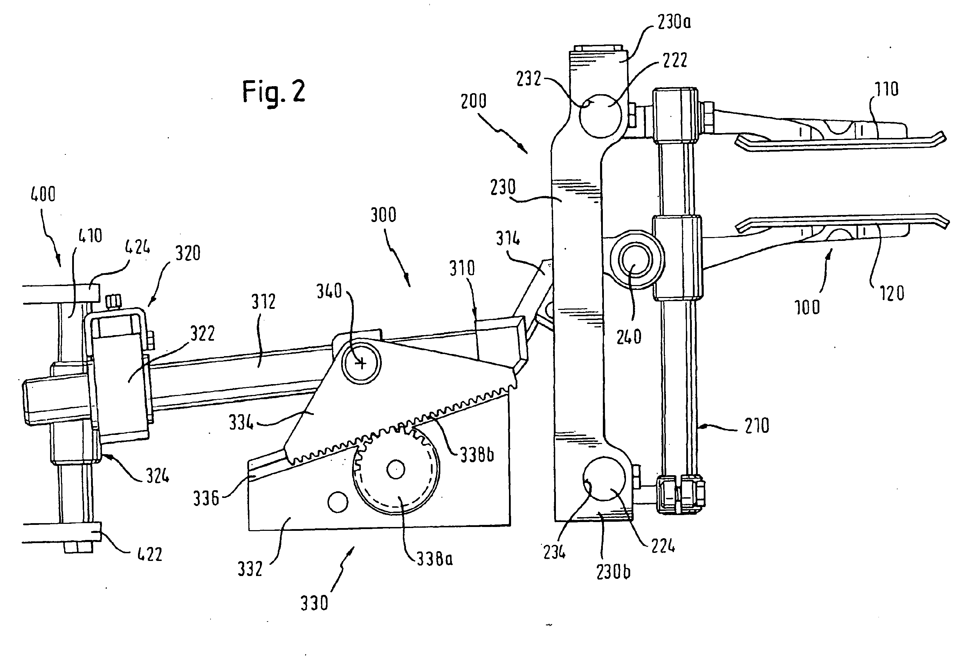

In Fig. 2 sind die wesentlichen Bestandteile der erfindungsgemäßen Vorrichtung wiedergegeben. Wie aus Fig. 2 entnehmbar ist, setzt sich die erfindungsgemäße Vorrichtung aus der bereits erwähnten Verdrängerscherenanordnung 100 sowie weiterhin aus einer ersten Führungselementeanordnung 200, einer Antriebsübertragungseinheit 300 und einer zweiten Führungselementeanordnung 400 zusammen.

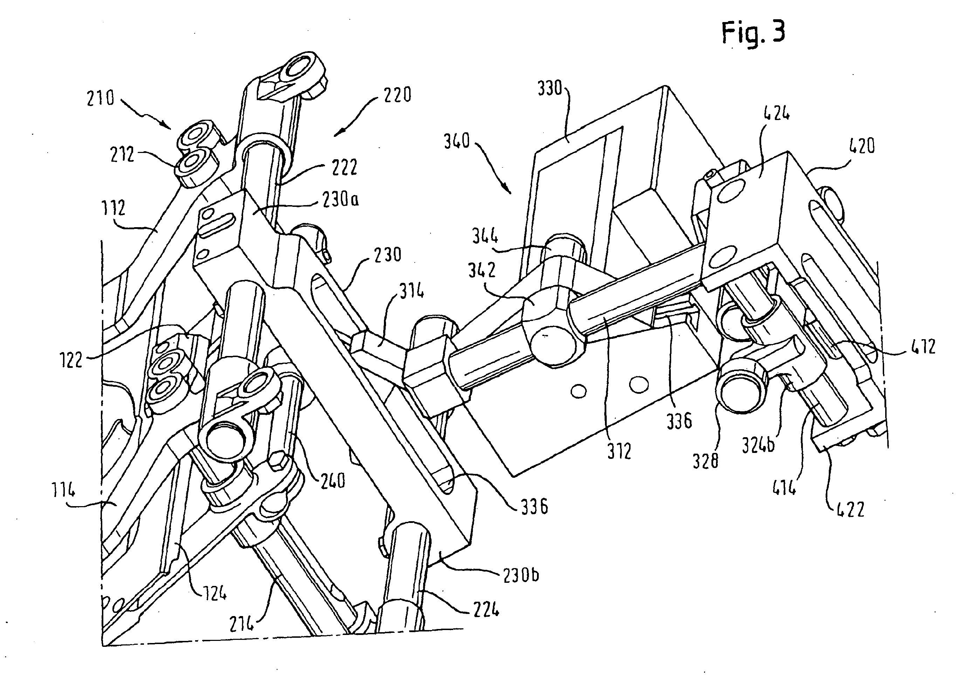

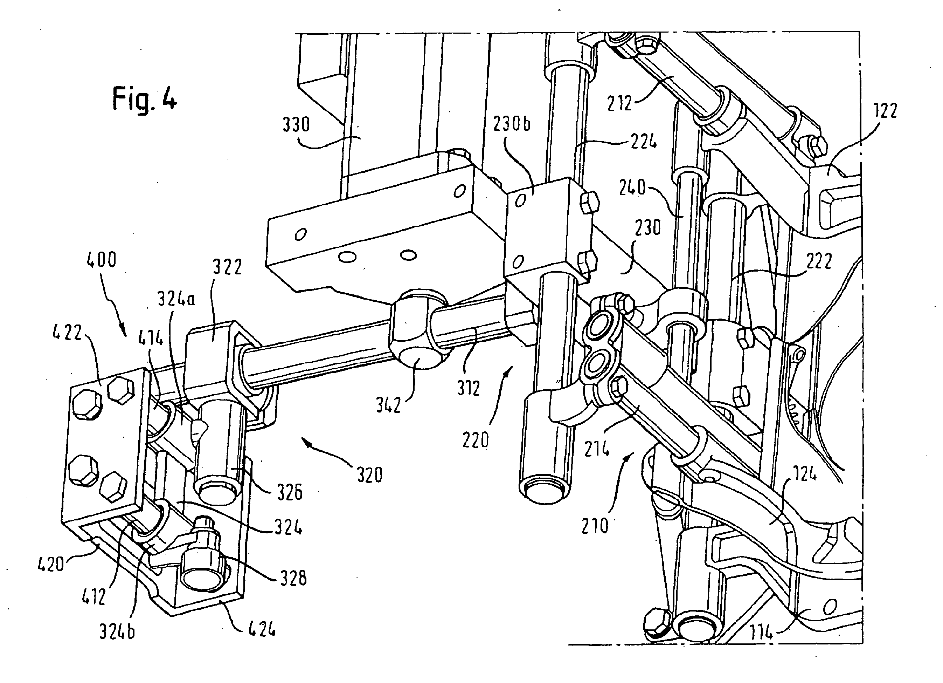

Wie bereits oben erwähnt, ist das erste, füllrohrseitige Verdrängerscherenpaar 110 ortsfest am in Fig. 2 oberen Ende einer Führungseinrichtung 210 der ersten Führungselementeanordnung 200 befestigt. Parallel zum ersten Verdrängerscherenpaar 110 ist das zweite Verdrängerscherenpaar 120 auf der selben Führungseinrichtung 210 angeordnet. Entlang dieser Führungseinrichtung 210 ist das zweite Verdrängerscherenpaar 120 gegenüber dem ersten Verdrängerscherenpaar 110 horizontal reversibel verschiebbar. Die Verdrängerscherenpaare 110, 120 bestehen jeweils aus zwei parallel eng aneinander vorbeigeführten Verdrängerscheren 112, 114, 122, 124. Die Verdrängerscheren 112, 122 sind auf einem ersten horizontalen Rohr 212 der Führungseinrichtung 210 und die Verdrängerscheren 114, 124 auf einem zweiten, zum ersten Rohr 212 parallelen Rohr 214 der Führungseinrichtung 210 angebracht, das unterhalb des ersten Rohrs 212 angeordnet ist, wie in Fig. 3 und Fig. 4 gezeigt. Durch die mittels eines nicht dargestellten Antriebs vertikal reversibel aufeinander zu bewegbaren Rohre 212, 214 werden auch die Verdrängerscheren 112, 114, 122, 124 vertikal reversibel aufeinander zu bewegt, wodurch die Verdrängerscherenpaare 110, 120 geschlossen bzw. geöffnet werden. In der Ausgangsstellung sind die Verdrängerscherenpaare 110, 120 geöffnet und das zweite Verdrängerscherenpaar 120 ist unmittelbar neben dem ersten Verdrängerscherenpaar 110 positioniert. Zur Minimierung der Durchbiegung der Führungsrohre 212, 214 der ersten Führungseinrichtung 210 ist parallel zu jedem von ihnen und in vertikaler Richtung darüber ein zweites, nicht näher bezeichnetes Rohr angeordnet.

Neben der bereits erwähnten ersten Führungseinrichtung 210 weist die erste Führungselementeanordnung 200, wie in Fig. 3 und Fig. 4 gezeigt, weiterhin eine zweite Führungseinrichtung 220 sowie eine Traverse 230 auf.

Die Führungselemente 222, 224 der zweiten Führungseinrichtung 220 sind senkrecht zu den durch die Rohre 212, 214 gebildeten Führungselementen 212, 214 der ersten Führungseinrichtung 210 ausgerichtet und an deren den Verdrängerscherenpaaren 110, 120 abgewandten Seite angeordnet. Die Führungselemente 222, 224 der zweiten Führungseinrichtung 220 werden jeweils durch ein Führungsrohr 222, 224 gebildet, die parallel zueinander verlaufen.

Die Traverse 230 ist im Wesentlichen quaderförmig mit abgekröpften, verdickten Enden 230a, 230b ausgebildet. Durch diese Enden 230a, 230b verlaufen parallel zueinander und senkrecht zu einer Seitenfläche zwei Bohrungen 232, 234, die die beiden Führungsrohre 222, 224 der zweiten Führungseinrichtung 220 aufnehmen und mittig fixieren. An den in Fig. 4 von der Traverse 230 senkrecht nach oben weisenden Abschnitten der Führungsrohre 222, 224 der zweiten Führungseinrichtung 220 ist das Führungsrohr 212 der ersten Führungseinrichtung 210 parallel zur Traverse 230 verschiebbar angeordnet. Das Führungsrohr 214 der ersten Führungseinrichtung 210 ist an den in Fig. 4 senkrecht nach unten weisenden Abschnitten der Führungsrohre 222, 224 der zweiten Führungseinrichtung 220 parallel zur Traverse 230 verschiebbar angeordnet. An den Stirnenden der Traverse 230 befinden sich nicht näher bezeichnete Gewindebohrungen, um die Traverse 230 an einem ebenfalls nicht näher gezeigten Maschinenrahmen zu befestigen.

Eine vertikale Führungsstange 240 ist parallel zu der zweiten Führungseinrichtung 220 sowie senkrecht zwischen der Traverse 230 und der Führungseinrichtung 210 verlaufend angeordnet. An ihr ist das zweite Verdrängerscherenpaar 120 vertikal verschiebbar befestigt. Dadurch wird die gleichzeitige horizontale Verschiebbarkeit der Verdrängerscheren 122, 124 entlang der ersten Führungseinrichtung 210 gewährleistet sowie deren vertikale Ausrichtung zueinander.

Die Antriebsübertragungseinheit 300 besteht, wie in Fig. 2 gezeigt, im Wesentlichen aus einer Antriebskraft-Übertragungseinheit 310, einer Antriebseinheit 320 und einer Betätigungseinheit 330, welche einen Schwenkpunkt 340 enthält.

Die Antriebskraft-Übertragungseinheit 310 wird aus einer Betätigungsstange 312 gebildet, die an ihrem zu den Verdrängerscherenpaaren 110, 120 weisenden Ende 314 abgekröpft ist. Die Abkröpfung kann vorgesehen sein, um Kollisionen bewegter Maschinenteile zu verhindern. Die Betätigungsstange 312 hat einen kreisrunden Querschnitt und erstreckt sich horizontal und im wesentlichen senkrecht zu einer durch die Mittelachsen der Führungsrohre 212, 214 der ersten Führungseinrichtung 210 gebildeten Ebene nach links, in Richtung der o.g. zweiten Führungselementeanordnung 400. Mit ihrem abgekröpften Ende 314 ist die Betätigungsstange 312 schwenkbar etwa mittig an der vertikalen Führungsstange 240 befestigt, wobei sie, wie in Fig. 3 zu sehen ist, durch ein horizontales Langloch 236 in der Traverse 230 hindurch geführt ist. Ein Abschnitt des dem abgekröpften Ende gegenüberliegenden Endbereichs der Betätigungsstange 312, der nicht näher bezeichnet ist, ist in einem gelenkelastischen Pufferelement 322 an der Antriebseinheit 320 gelagert.

Die Antriebseinheit 320 besteht aus einem horizontal reversibel verfahrbaren Schlitten 324, der zwei parallel zueinander ausgerichtete Hülsen 324a, 324b enthält. An der in Fig. 4 oberen Hülse 324a ist auf ihrer, der Verdrängerscherenanordnung 100 zugewandten Seite, senkrecht zu ihrer Mittelachse das Tragelement 326 des sich nach oben anschließenden elastischen Pufferelements 322 angeordnet. An der unteren Hülse 324b ist auf der gleichen Seite und koaxial mit dem Tragelement 326 des Pufferelements 322 die nicht näher bezeichnete Achse einer sich nach unten anschließenden Führungsrolle 328 angeordnet. Die Führungsrolle 328 steht im Eingriff mit einem nicht gezeigten Antrieb, der z.B. durch eine Kurvenscheibe gebildet sein kann. Durch diesen Antrieb kann die Antriebseinheit 320 reversibel zwischen zwei Anschlagspositionen, auf die später genauer eingegangen wird, entlang einer dritten Führungseinrichtung 410 bewegt werden. Zwischen seinen beiden Enden wird die Betätigungsstange 312 durch den Schwenkpunkt 340 geführt.

Nach links schließt sich, wie aus Fig. 4 hervorgeht, die bereits erwähnte zweite Führungselementeanordnung 400 an, die sich aus der dritten Führungseinrichtung 410, die von einer Anschlageinrichtung 420 gehalten wird, zusammen setzt.

Die dritte Führungseinrichtung 410 besteht aus zwei horizontal ausgerichteten, parallel übereinander verlaufenden Führungsrohren 412, 414, die parallel zu den Rohren 212, 214 der ersten Führungseinrichtung 210 angeordnet sind. Auf diesen Führungsrohren 412, 414 ist der Schlitten 324 mit je einer Hülse 324a, 324b verschiebbar angeordnet. Die Rohre 412, 414 der dritten Führungseinrichtung 410 werden an ihren Enden von einer Anschlageinrichtung 420 gehalten, die aus zwei parallelen Befestigungspunkten 422, 424 besteht, deren Haupterstreckungsebenen senkrecht zu den Führungsrohren 412, 414 verlaufen. Die Anschlageinrichtung 420 wird in nicht näher gezeigter Weise am Maschinenrahmen befestigt und bildet einen ersten Befestigungspunkt 422 und einen zweiten Befestigungspunkt 424 für den auf der dritten Führungseinrichtung 410 geführten Schlitten 324.

In der ersten Anschlagposition befindet sich der Schlitten 324 der Antriebseinheit 320 in Anlage an dem ersten Befestigungspunkt 422 und in einer zweiten Anschlagposition befindet er sich in Anlage an dem zweiten Befestigungspunkt 424 der Anschlageinrichtung 420.

Zwischen den Führungselementeanordnungen 200, 400 ist in unmittelbarer Nähe zu dem Antriebskraft-Übertragungselement 310 die Betätigungseinheit 330 angeordnet, die den oben erwähnten Schwenkpunkt 340 enthält.

Die Betätigungseinheit 330 besteht aus einer, an dem Maschinenrahmen fest angebrachten Trageinrichtung 332, die einen nicht näher bezeichneten Antrieb enthält, und einer beweglichen Verstelleinrichtung 334, die von dem Antrieb entlang einer Führungsbahn 336 bewegbar ist. Der nicht näher dargestellte Maschinenrahmen verläuft in Fig. 2 waagerecht an den Unterkanten der fest angebrachten Trageinrichtung 332 und der unteren Stirnseite der Traverse 230. Die Führungsbahn 336 und die entsprechend Fig. 2 waagerecht verlaufende Unterkante der fest angebrachten Trageinrichtung 332 schließen einen spitzen Winkel ein. Dieser Winkel gibt der Führungsbahn 336 eine solche Neigung, dass sie, wenn sich der Schlitten 324 in der ersten Anschlagposition befindet, parallel zur Achse der Betätigungsstange 312 verläuft. Die Führungsbahn 336 wird, wie in Fig. 3 zu sehen ist, durch eine T-förmige Nut gebildet. Sie kann aber auch jede andere geeignete Führung realisiert werden, wie beispielsweise durch eine Schwalbenschwanz- oder Prismenführung.

An der beweglichen Trageinrichtung 334 ist der Schwenkpunkt 340 angebracht. Er besteht aus einer Lagerbuchse 342, in der die Betätigungsstange 312 verschiebbar gelagert ist. Die Lagerbuchse 342 ist des weiteren um eine senkrecht zur Betätigungsstange 312 verlaufenden Schwenkachse 344 schwenkbar. Der in der Betätigungseinheit 330 enthaltene Antrieb betätigt ein Ritzel 338a, das im Eingriff mit einer Zahnstange 338b an der beweglichen Verstelleinrichtung 334 steht. Die Führungsbahn 336 und die Zahnstange 338b verlaufen parallel zueinander, wodurch mittels des Antriebs die bewegliche Verstelleinrichtung 334 entlang der Führungsbahn 336 reversibel verschiebbar ist. Mit ihr verschiebt sich auch der Schwenkpunkt 340 entlang der Betätigungsstange 312.

Durch die Verschiebung des Schwenkpunktes 340 wird das Längenverhältnis der Hebelabschnitte der Betätigungsstange 312, d.h. die beiden Abschnitte vor und hinter dem Schwenkpunkt 340, verändert. Hierdurch verändert sich der Hub des zweiten Verdrängerscherenpaars 120. So kann die Länge des Zopfes Z, der zwischen Verdrängerscherenpaaren 110, 120 gebildet wird und dem Hub des zweiten Verdrängerscherenpaars 120 entspricht, eingestellt werden. Dabei wird durch die Neigung der Führungsbahn 336 sichergestellt, dass die Anfangsposition der Verdrängerscherenpaare 110, 120 unverändert bleibt.

Der Bewegungsablauf der erfindungsgemäßen Vorrichtung wird im folgenden anhand der Herstellung eines Wurstprodukts P erläutert:

Von einer Füllmaschine wird ein Füllgut, hier Wurstbrät, einer Clipmaschine C über das Füllrohr F zugeführt. Um das Füllrohr F herum befindet sich der Vorrat an schlauchförmigen Verpackungshüllenmaterial VH. Dieses wird in bekannter Weise gefüllt. Durch das zeitgleiche Setzen und Verschließen zweier Clips CL auf einem füllgutfreien Abschnitt des Verpackungshüllenmaterials VH in der Clipmaschine C wird zum einen das gerade befüllte Wurstprodukt P fertiggestellt und zum anderen der Anfangszipfel eines neuen, noch zu befüllenden Produkts P geschaffen. Ein Trennwerkzeug, wie beispielsweise ein Messer, trennt das fertiggestellte Wurstprodukt P vom Vorrat an schlauchförmigen Verpackungshüllenmaterial VH ab. Beim Setzen und Verschließen der Clips CL kann dabei in den Clip CL, der das Wurstprodukt P fertig stellt, ein nicht näher gezeigtes Aufhängeelement in Form einer Fadenschlaufe über eine Zuführeinrichtung zugeführt und mit diesem Clip CL an dem Wurstprodukt P befestigt werden.

Ist ein neuer Anfangszipfel durch Setzen eines Clips CL geschaffen worden, wird eine bestimmte Menge Füllgut durch das Füllrohr F in das Verpackungshüllenmaterial VH befördert. Die Verdrängerscherenpaare 110, 120 befinden sich in ihrer Ausgangsposition. Das heißt, sie liegen parallel aneinander, in einer senkrechten Ebene, unmittelbar vor dem clipmaschinenseitigen Ende des Füllrohrs F und die Scheren 112, 114, 122, 124 sind auseinandergefahren. Weiterhin befinden sich die beiden Schließwerkzeuge S1, S2 auseinandergefahren in ihrer Ausgangsstellung ober- und unterhalb der Verdrängerscherenpaare 110, 120. Ist die vorgesehene Menge Füllgut abgefüllt, wird die Zufuhr unterbrochen. Jetzt werden die Verdrängerscheren 112, 114, 122, 124 zusammen gefahren. Dabei wird das in diesem Bereich befindliche Füllgut verdrängt und das Verpackungshüllenmaterial VH wird zusammengerafft. Anschließend wird die Antriebseinheit 320 durch ihrem Antrieb aus der ersten Anschlagposition, in der sich der Schlitten 324 der Antriebseinheit 320 in Anlage an dem Befestigungspunkt 422 befindet, in Richtung ihrer zweiten Anschlagposition bewegt. Dabei wird das antriebsseitige Ende der Antriebskraft-Übertragungseinheit 310 mit der Antriebseinheit 320 mitbewegt. Die Antriebskraft-Übertragungseinheit 310 schwenkt dadurch in ihrer horizontalen Ebene um die Schwenkachse 344 des Schwenkpunkts 340 und bewegt mit ihrem abgekröpften Ende 314 die vertikale Führungsstange 240 horizontal entlang der Führungseinrichtung 210.

An der vertikalen Führungsstange 240 ist das zweite Verdrängerscherenpaar 120 befestigt, das nun entlang der ersten Führungseinrichtung 210 vom ersten Verdrängerscherenpaar 110 linear in Förderrichtung wegbewegt wird. Der mit Füllgut prallgefüllte Abschnitt des Verpackungshüllenmaterials VH wird durch das zweite Verdrängerscherenpaar 120 vom Füllrohr F wegbewegt und zusätzliches Verpackungshüllenmaterial VH wird zwischen den Verdrängerscheren 112, 114 des ersten Verdrängerscherenpaars 110 hindurch vom Vorrat abgezogen. Dadurch wird ein füllgutfreier Zopfabschnitt Z geschaffen, auf dem jetzt die Clips CL gesetzt werden. Ist vorgesehen, ein Aufhängeelement am Wurstprodukt P zu befestigen, so wird dieses in den Clip CL, der das Wurstprodukt P fertig stellt, eingelegt und mit diesem befestigt. Sind beide Clips CL gesetzt kann das fertige Wurstprodukt P durch ein Trennwerkzeug, wie beispielsweise ein Messer, vom übrigen Vorrat an Verpackungshüllenmaterial VH getrennt werden. Die Scheren 112, 114, 122, 124 werden vertikal auseinandergefahren und geben die von ihnen gehaltenen Zopfabschnitte frei. Das fertige Wurstprodukt P wird durch eine nicht dargestellte Transporteinrichtung aus der Clipmaschine C befördert. Das zweite Verdrängerscherenpaar 120 wird in die oben beschriebene Ausgangsposition zurückgefahren. Dies geschieht in der umgekehrten Reihenfolge der Abläufe des zuvor beschriebenen Auseinanderfahrens. Befinden sich die Verdrängerscherenpaare 110, 120 wieder in der Ausgangsposition, kann ein neuer Arbeitstakt beginnen. Bei einem solchen Arbeitstakt wird die Antriebseinheit 320 genau einmal aus der ersten Anschlagposition, in der sich die Verdrängerscherenpaare 110, 120 in ihrer Ausgangsposition befinden, in die zweite Anschlagposition bewegt und wieder in die erste Position zurück bewegt.

Soll die Länge des füllgutfreien Zopfes Z verändert werden, beispielsweise zur Herstellung von Wurstprodukten P in einer anderen als der eingestellten Größe, geschieht dies durch die Verschiebung des Schwenkpunktes 340 auf der Betätigungsstange 312 entlang der Führungsbahn 336 der Trageinrichtung 332.

Ist es erforderlich, den füllgutfreien Zopf Z zu verlängern, wird die Verstelleinrichtung 334, die den Schwenkpunkt 340 enthält, entlang der Führungsbahn 336 der Trageinrichtung 332 in Richtung der Antriebseinheit 320 verschoben. Dadurch wird der vom Schwenkpunkt 340 zur Antriebseinheit 320 weisende Hebelabschnitt der Betätigungsstange 312 kürzer und der zur Verdrängerscherenanordnung 100 weisende Hebelabschnitt länger. Bei gleichbleibendem Verschiebeweg des Schlittens 324 verlängert sich durch das veränderte Längenverhältnis der Hebelabschnitte der Betätigungsstange 312 der Verschiebeweg des zweiten Verdrängerscherenpaares 120 gegenüber dem ersten Verdrängerscherenpaar 110. Da die Führungsbahn 336, wenn sich der Schlitten 324 in der ersten Anschlagposition befindet, parallel zur Betätigungsstange 312 verläuft, verlängert sich der Verschiebeweg des zweiten Verdrängerscherenpaares 120 ausschließlich in Förderrichtung nach rechts. Die Ausgangsposition des zweiten Verdrängerscherenpaares 120 parallel dicht neben dem ersten Verdrängerscherenpaar 110 bleibt unverändert.

Soll eine Verkürzung des füllgutfreien Zopfes Z erreicht werden, wird die Verstelleinrichtung 334, die den Schwenkpunkt 340 enthält, entlang der Führungsbahn 336 der Trageinrichtung 332 in Richtung der Verdrängerscherenanordnung 100 verschoben. Entsprechend dem vorgenannten verändert sich das Längenverhältnis der Hebelabschnitte der Betätigungsstange 312 so, dass sich der Verschiebeweg des zweiten Verdrängerscherenpaares 120 verkürzt. Auch hier bleibt, wie oben schon beschrieben, die Ausgangsposition des zweiten Verdrängerscherenpaares 120 unverändert.

Des weiteren ist noch anzumerken, dass alle beschriebenen Bauteile, soweit nicht anders beschrieben, aus Edelstahl gefertigt sind.

Abschließend ist noch zu bemerken, dass die Erfindung nicht auf die in den Fig. 2 bis 4 dargestellten Ausführungen beschränkt ist. So kann der Antrieb der Antriebskraft-Übertragungseinheit 310 beispielsweise durch einen Exzenter gebildet werden. Auch die Führungselementeanordnungen 200, 400 können durch andere Teile als Rohre realisiert werden. Es ist ebenso denkbar, zur Verstellung des Schwenkpunktes 340 eine anderen als einen Zahntrieb zu verwenden, beispielsweise einen Kettentrieb.

### Bezugszeichenliste

- C: Clipmaschine
- CL: Clip
- F: Füllrohr
- P: Wurstprodukt
- S1: Schließwerkzeug
- S2: Schließwerkzeug
- VH: Verpackungshüllenmaterial
- Z: füllgutfreier Zopf
- 100: Verdrängerscherenanordnung
- 110: erstes Verdrängerscherenpaar
- 112: Verdrängerscheren
- 114: Verdrängerscheren
- 120: zweites Verdrängerscherenpaar
- 122: Verdrängerscheren
- 124: Verdrängerscheren
- 200: erste Führungselementeanordnung
- 210: erste Führungseinrichtung
- 212: Führungsrohr
- 214: Führungsrohr
- 220: zweite Führungseinrichtung
- 222: Führungsrohr
- 224: Führungsrohr
- 230: Traverse
- 230a: verdicktes Ende
- 230b: verdicktes Ende
- 232: Bohrung
- 234: Bohrung
- 236: Langloch
- 240: vertikale Führungsstange
- 300: Antriebsübertragungseinheit
- 310: Antriebskraft-Übertragungseinheit
- 312: Betätigungsstange
- 314: abgekröpftes Ende
- 320: Antriebseinheit
- 322: elastisches Pufferelement
- 324: Schlitten
- 324a: obere Hülse
- 324b: untere Hülse
- 326: Tragelement
- 328: Führungsrolle
- 330: Betätigungseinheit
- 332: Trageinrichtung
- 334: Verstelleinrichtung
- 336: Führungsbahn
- 338a: Ritzel
- 338b: Zahnstange
- 340: Schwenkpunkt
- 342: Lagerbuchse
- 344: Schwenkachse
- 400: zweiten Führungselementeanordnung
- 410: dritte Führungseinrichtung
- 412: Führungsrohr
- 414: Führungsrohr
- 420: Anschlageinrichtung
- 422: erster Befestigungspunkt
- 424: zweiter Befestigungspunkt

## Patentansprüche

1. Vorrichtung zum Ausbilden eines Zopfes (Z) an einem Verpackungshüllenmaterial (VH), das ein Füllgut, insbesondere Wurstbrät, aufnimmt, wobei der Zopf (Z) wenigstens während seiner Ausbildung zumindest annährend füllgutfrei ist, enthaltend: eine erste Verdrängereinheit (110) sowie eine zweite Verdrängereinheit (120), die gegenüber der ersten Verdrängereinheit (110) in einer Linearbewegung reversibel verfahrbar ist, und eine Antriebseinheit für zumindest den Antrieb der Linearbewegung der zweiten Verdrängereinheit (120),
**dadurch gekennzeichnet, dass** zwischen der Antriebseinheit und der zweiten Verdrängereinheit (120) mindestens eine Antriebskraft-Übertragungseinheit (310) vorgesehen ist, die die von der Antriebseinheit hervorgerufene Antriebskraft auf die zweite Verdrängereinheit (120) überträgt und die um einen Schwenkpunkt (340) reversibel verschwenkbar ist, dessen Lageposition einstellbar ist.

2. Vorrichtung nach Anspruch 1,
**dadurch gekennzeichnet, dass** zur Verstellung der Lageposition des Schwenkpunktes (340) eine mit der Antriebskraft-Übertragungseinheit (310) schwenkbar verbundene und den Schwenkpunkt (340) enthaltende Betätigungseinheit (334) vorgesehen ist, die entlang einer Führungsbahn (336) reversibel mittels eines Verstellantriebs verfahrbar ist.

3. Vorrichtung nach Anspruch 2,
**dadurch gekennzeichnet, dass** die Führungsbahn (336) in einer Ausrichtung angeordnet ist, in der sie parallel zu einer gedachten Linie zwischen dem Anlenkpunkt der zweiten Verdrängereinheit (120) und dem Krafteinleitungspunkt an die Antriebskraft-Übertragungseinheit (310) zu der Antriebseinheit verläuft.

4. Vorrichtung nach einem der Ansprüche 1 bis 3,
**dadurch gekennzeichnet, dass** die Antriebskraft-Übertragungseinheit (310) durch eine Betätigungsstange (312) gebildet ist, die an ihrem zu der zweiten Verdrängereinheit (120) weisenden Ende mit dieser gelenkig verbunden ist und die an ihrem zu der Antriebseinheit weisenden Ende mit der Antriebseinheit in Wirkverbindung steht.

5. Vorrichtung nach Anspruch 4,
**dadurch gekennzeichnet, dass** die Betätigungsstange (312) im Bereich ihres zu der zweiten Verdrängereinheit (120) weisenden Endes eine in der Bewegungsebene liegende Abkröpfung (314) aufweist.

6. Vorrichtung nach einem der Ansprüche 1 bis 5,
**dadurch gekennzeichnet, dass** die zweite Verdrängereinheit (120) entlang einer ersten Führungseinrichtung (210), vorzugsweise an Führungsstangen (212, 214), geführt ist, deren Führungsachse die Mittellängsachse der Antriebskraft-Übertragungseinheit (310) schneidet.

7. Vorrichtung nach einem der Ansprüche 1 bis 6,
**dadurch gekennzeichnet, dass** die Antriebskraft-Übertragungseinheit (310) im Bereich der Antriebseinheit entlang einer dritten Führungseinrichtung (410), vorzugsweise an Führungsstangen (412, 414), geführt ist, deren Führungsachse die Mittellängsachse des Antriebskraft-Übertragungseinheit (310) schneidet.

8. Vorrichtung nach Anspruch 7,
**dadurch gekennzeichnet, dass** die Antriebskraft-Übertragungseinheit (310) an der dritten Führungseinrichtung (410) mittels eines gelenkelastischen Pufferelements (322) angebunden ist.

9. Vorrichtung nach einem der Ansprüche 1 bis 8,
**dadurch gekennzeichnet, dass** die Antriebskraft-Übertragungseinheit (310) im Bereich ihres zu der Antriebseinheit weisenden Endes eine gelenkige Lagerung aufweist.

10. Vorrichtung nach einem der Ansprüche 1 bis 9,
**dadurch gekennzeichnet, dass** die erste und/oder die zweite Verdrängereinheit (110, 120) jeweils durch einen Linearspreizverdränger gebildet sind.

## Claims

1. A device for forming a braid (Z) on a wrapping material (VH) containing a filling material, especially sausage meat, wherein the braid (Z) being at least approximately free of filling material at least during its formation, comprising: a first displacer unit (110) and a second displacer unit (129) being reversibly traversable relative to said first displacer unit (110) in a linear motion, and a driving unit for driving at least said linear motion of said second displacer unit (120),
**characterized in that** at least one driving force transmission unit (310) is provided between said driving unit and said second displacer unit (120), which is transmitting the driving force caused by said driving unit to said second displacer unit (120) and being reversibly pivotable around a fulcrum (340) having an adjustable position.

2. The device according to claim 1,
**characterized in that** for adjusting the position of said fulcrum (340) an actuating unit (334) being pivotably connected to said driving force transmission unit (310) and comprising said fulcrum (340) is provided and is being reversibly traversable by means of an adjustment drive along a guiding path (336).

3. The device according to claim 2,
**characterized in that** said guiding path (336) is arranged in an orientation in which it extends parallel to an imaginary line between the pivot point of said second displacer unit (120) and a force application point at said driving force transmission unit (310) to said driving unit.

4. The device according to any one of the claims 1 to 3,
**characterized in that** said driving force transmission unit (310) is formed by an actuating rod (312) having one end facing to said second displacer unit (120) and being pivotably connected to the same, and another end facing to said driving unit and being operatively connected to said driving unit.

5. The device according to claim 4,
**characterized in that** said actuating rod (312) has, in the area of its end facing to the second displacer unit (120), a cranked section (314) which is arranged in the motion plane.

6. The device according to any one of the claims 1 to 5,
**characterized in that** said second displacer unit (120) is being guided, preferably by guide rods (212, 214), along a first guide device (210) having a guide axis intersecting the longitudinal center axis of said driving force transmission unit (310).

7. The device according to any one of the claims 1 to 6,
**characterized in that** said driving force transmission unit (310) is being guided in the area of said driving unit, preferably by guide rods (412, 414), along a third guide device (410) having a guide axis intersecting the longitudinal center axis of said driving force transmission unit (310).

8. The device according to claim 7,
**characterized in that** said driving force transmission unit (310) is being connected to said third guide device (410) by means of pivot-resilient cushion element (322).

9. The device according to any one of the claims 1 to 8,
**characterized in that** said driving force transmission unit (310) has an articulated support in the area of its end facing to said driving unit.

10. The device according to any one of the claims 1 to 9,
**characterized in that** said first and/or second displacer unit (110, 120) are formed by a linear spreading displacer, respectively.

## Revendications

1. Dispositif de formation d'une tresse (Z) sur un matériau (VH) enveloppant d'emballage, qui reçoit un produit de remplissage, notamment de la chair à saucisse, dans lequel la tresse (Z) est au moins à peu près sans produit de remplissage pendant sa formation, comprenant : une première unité (110) d'embossage ainsi qu'une deuxième unité (120) d'embossage, qui peut être déplacée de manière réversible sensiblement suivant un déplacement linéaire par rapport à la première unité (110) d'embossage, et une unité d'entraînement, pour effectuer au moins le déplacement linéaire de la deuxième unité (120) d'embossage,
**caractérisé en ce qu'**il est prévu entre l'unité d'entraînement et la deuxième unité (120) d'embossage au moins une unité (310) de transmission de la force d'entraînement, qui transmet à la deuxième unité (120) d'embossage la force d'entraînement provoquée par l'unité d'entraînement, et peut basculer réversiblement autour d'un point (340) de basculement, dont la position est réglable.

2. Dispositif suivant la revendication 1,
**caractérisé en ce que**, pour régler la position du point (340) de basculement, il est prévu une unité (334) d'actionnement, qui est reliée à basculement à l'unité (310) de transmission de la force d'entraînement, qui contient le point (340) de basculement et qui peut être déplacée le long d'une voie (336) de guidage réversiblement au moyen d'un entraînement de réglage.

3. Dispositif suivant la revendication 2,
**caractérisé en ce que** la voie (336) de guidage est disposée dans une direction, dans laquelle elle s'étend parallèlement à une ligne imaginaire entre le point d'articulation de la deuxième unité (120) d'embossage et le point de transmission de force sur l'unité (310) de transmission de la force d'entraînement à l'unité d'entraînement.

4. Dispositif suivant l'une des revendications 1 à 3,
**caractérisé en ce que** l'unité (310) de transmission de la force d'entraînement est formée par une barre (312) d'actionnement, qui est à son extrémité tournée vers la deuxième unité (120) d'embossage articulée à celle-ci et qui coopère avec l'unité d'entraînement à son extrémité tournée vers l'unité d'entraînement.

5. Dispositif suivant la revendication 4,
**caractérisé en ce que** la barre (312) d'actionnement a, dans la partie de son extrémité tournée vers la deuxième unité (120) d'embossage, une oreille (314) se trouvant dans le plan du déplacement.

6. Dispositif suivant l'une des revendications 1 à 5,
**caractérisé en ce que** la deuxième unité (120) d'embossage est guidée le long d'un premier dispositif (210) de guidage, de préférence sur des barres (212, 214) de guidage, dont l'axe de guidage coupe l'axe longitudinal médian de l'unité (310) de transmission de la force d'entraînement.

7. Dispositif suivant l'une des revendications 1 à 6,
**caractérisé en ce que** l'unité (310) de transmission de la force d'entraînement est guidée dans la partie de l'unité d'entraînement le long d'un troisième dispositif (410) de guidage, de préférence à des barres (412, 414) de guidage, dont l'axe de guidage coupe l'axe longitudinal médian de l'unité (310) de transmission de la force d'entraînement.

8. Dispositif suivant la revendication 7,
**caractérisé en ce que** l'unité (310) de transmission de la force d'entraînement est reliée au troisième dispositif (410) de guidage au moyen d'un élément (322) tampon ayant une élasticité d'articulation.

9. Dispositif suivant l'une des revendications 1 à 8,
**caractérisé en ce que** l'unité (310) de transmission de la force d'entraînement a un palier articulé dans la partie de son extrémité tournée vers l'unité d'entraînement.

10. Dispositif suivant l'une des revendications 1 à 9,
**caractérisé en ce que** la première et/ou la deuxième unité (110, 120) d'embossage sont formées respectivement par un embosseur à étalement linéaire.
